(19) Europäisches Patentamt European Patent Office Office européen des brevets

(11) **EP 3 772 494 B1**

(12) **EUROPÄISCHE PATENTSCHRIFT**

(45) Veröffentlichungstag und Bekanntmachung des Hinweises auf die Patenterteilung:
**05.03.2025   Patentblatt 2025/10**

(51) Internationale Patentklassifikation (IPC):
**C04B 30/00** (2006.01)        **C04B 30/02** (2006.01)
**C04B 111/28** (2006.01)

(21) Anmeldenummer: **20190106.3**

(22) Anmeldetag: **07.08.2020**

(52) Gemeinsame Patentklassifikation (CPC):
(C-Sets verfügbar)
**C04B 30/00; C04B 30/02;** C04B 2111/28;
C04B 2201/20; C04B 2201/32        (Forts.)

(54) **HOCHTEMPERATURSUPERISOLATION**

HIGH TEMPERATURE SUPERINSULATION

SUPERISOLATION HAUTE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **08.08.2019   DE 102019211924**

(43) Veröffentlichungstag der Anmeldung:
**10.02.2021   Patentblatt 2021/06**

(73) Patentinhaber: **Rottmann, Matthias 40723 Hilden (DE)**

(72) Erfinder: **Rottmann, Matthias 40723 Hilden (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
WO-A1-2016/108794        DE-A1- 102005 045 726
DE-A1- 102010 010 957        DE-A1- 102013 008 263
DE-A1- 102015 008 131        DE-A1- 19 540 316
US-A- 4 221 595        US-A1- 2008 277 617

• **THOMAS BEIKIRCHER: "Vakuumsuperisolation (VSI): Stand der Forschung und Entwicklung zu höchsteffizienter Dämmung und Wärmespeicherung in der energieeffizienten Industrie sowie im Gebäudebereich", INTERNET CITATION, 29 March 2017 (2017-03-29), pages 1 - 93, XP009556834, Retrieved from the Internet <URL:https://www.hs-karlsruhe.de/fileadmin/ hska/EIT/Aktuelles/ seminar_erneuerbare_energien/Sommer_2017/ Folien/29032017VSIBeikircher.pdf>**

(52) Gemeinsame Patentklassifikation (CPC): (Forts.)

C-Sets
**C04B 30/00, C04B 14/022, C04B 14/185,
C04B 40/0042;
C04B 30/02, C04B 14/022, C04B 14/185,
C04B 14/42, C04B 40/0042**

**Beschreibung**

Die vorliegende Offenbarung betrifft ein Hochtemperatur-Wärmeisolationsmaterial in Form einer Pulvermischung mit expandiertem Perlit in Pulverform und Trübungsmittel in Pulverform. Ferner betrifft die Offenbarung Hochtemperatur-Wärmeisolationselemente mit diesem Hochtemperatur-Wärmeisolationsmaterial, die für Temperaturen zwischen 100°C und 800°C geeignet sind.

Wärmeisolationsmaterial aus pulverförmigem expandiertem Perlit oder pyrogener Kieselsäure mit Trübungsmittel ist z. B. aus DE102008003400A1, DE102008003421A1, DE102005045726A1, DE102010029513A1, DE202007013074U1, DE4432896C2, WO2017/097768A1, US3147877A und WO2016/108794 A1 bekannt. Diese bekannten Wärmeisolationsmaterialien und daraus hergestellte Vakuumsuperisolationselemente eignen sich für Temperaturen im Bereich zwischen -100°C und +80°C, für Hochtemperaturanwendungen im Bereich zwischen 100°C und 800°C sind sie kaum geeignet.

Die effektive Wärmeleitfähigkeit k_eff eines Wärmeisolationsmaterials oder eines Wärmeisolationselements setzt sich aus drei Komponenten zusammen:

$$k\_eff = k\_Gas + k\_FK + k\_Strahlung$$

k_Gas wird durch Konvektion und Gaswärmeleitung verursacht. Durch Evakuierung kann dieser Anteil verkleinert werden. k_FK ergibt sich aus der Festkörperwärmeleitung. Durch kleinste Kontaktstellen zwischen den einzelnen Partikeln, z. B. Pulver mit körniger Struktur, kann dieser Anteil verringert werden. Für die Wärmeleitfähigkeit aufgrund von Wärmestrahlung gilt:

$$k\_Strahlung = (16 * SBK * T^3) / (3 * E)$$

mit Stefan-Boltzmann-Konstante SBK, dem Extinktionskoeffizienten E und der mittleren Strahlungstemperatur T. Aufgrund der $T^3$-Abhängigkeit der Wärmeleitfähigkeit aufgrund von Wärmestrahlung ist bei Hochtemperaturanwendungen dieser Anteil der Wärmeleitfähigkeit dominierend. k_Strahlung lässt sich durch Erhöhung des Extinktionskoeffizienten E verringern. In diesem Zusammenhang wird unter einem Trübungsmittel allgemein ein Material verstanden, welches in Kombination mit einem anderen Material, genannt Basismaterial, einen höheren Extinktionskoeffizienten für Wärmestrahlung aufweist als das Basismaterial, sodass sich der Extinktionskoeffizient der Kombination aus Basismaterial und Trübungsmittel gegenüber dem reinen Basismaterial erhöht. Aus einem Vortrag von Dr. Thomas Beikircher am 29.3.2017 in Karlsruhe über Vakuumsuperisolation (https://www.hs-karlsruhe.de/fileadmin/hska/EIT/Aktuelles/seminar_erneurba re_energien/Sommer_2017/Fo lien/29032017VSIBeikircher.pdf) ist bekannt, dass sich mit pyrogener Kieselsäure als Basismaterial durch den Zusatz von Trübungsmitteln im Temperaturbereich zwischen 400°C und 800°C effektive Wärmeleitfähigkeiten k_eff im Bereich zwischen 0,02 und 0,04 W/mK erzielen lassen. Nachteilig von pyrogener Kieselsäure ist der hohe Preis. Für das erheblich preiswertere expandierte Perlit als Basismaterial gibt es bei höheren Temperaturen noch keine experimentell ermittelten Werte für die Wärmeleitfähigkeit. Modellrechnungen lassen jedoch vermuten (siehe Beikircher), dass sich bei expandiertem Perlit mit Trübungsmitteln vergleichbare Werte für die effektive Wärmeleitfähigkeit erzielen lassen.

Es ist daher Aufgabe der vorliegenden Erfindung, ein Hochtemperatur-Wärmeisolationsmaterial auf der Basis von expandiertem Perlit mit Trübungsmittel sowie Hochtemperatur-Wärmeisolationselemente mit diesem Wärmeisolationsmaterial anzugeben.

Gemäß einem ersten Aspekt der Erfindung wird die genannte Aufgabe durch ein Hochtemperatur-Wärmeisolationsmaterial gemäß Patentanspruch 1 gelöst.

Experimente des Erfinders haben gezeigt, dass sich im Bereich zwischen 400°C und 800°C für eine Pulvermischung, die aus expandiertem Perlit und einem Trübungsmittel aus Borkarbid, Siliziumkarbid, Rutil, Ilmenit oder Kohlenstoff-Ruß oder einer Mischung aus diesen Stoffen besteht, Wärmeleitfähigkeiten k_eff im Bereich zwischen 0,013 und 0,05 W/mK erzielen lassen, vorausgesetzt die Gesamtdichte der Pulvermischung liegt im Bereich zwischen 160 und 500 kg/m$^3$, und vorausgesetzt in der Pulvermischung sind zwischen 20 und 80 Gewichts-% Siliziumkarbid als Trübungsmittel enthalten. Die Gesamtdichte der Pulvermischung lässt sich experimentell bestimmen, indem Masse und Volumen einer Pulverschüttung bestimmt und zueinander ins Verhältnis gesetzt werden. Der Anteil des Trübungsmittels in Gewichts-%, bezogen auf die gesamte Pulvermischung, lässt sich durch Wägung bestimmen.

Beispiele für Trübungsmittel sind Borkarbid, Siliziumkarbid, Rutil, Ilmenit, Kohlenstoff-Ruß oder eine Mischung aus diesen Stoffen. Durch Zusatz von Trübungsmitteln lässt sich k_eff bei höheren Temperaturen verringern. Erfindungsgemäß ist das Trübungsmittel Siliziumkarbid (SiC); es ist preisgünstig und führt zu geringen Werten für k_eff. Borkarbid (B4C) macht noch kleinere Werte für k_eff möglich, ist aber sehr teuer und daher nur für Spezialanwendungen interessant. Rutil (TiO2) und Ilmenit (FeTiO3) sind ähnlich preisgünstig wie Siliziumkarbid, liefern aber etwas höher Werte für k_eff in der Pulvermischung. Kohlenstoff-Ruß liefert ähnlich gute Werte für k_eff wie Borkarbid, ist aber in der Handhabung etwas schwieriger.

Gemäß einer bevorzugten Ausführungsform liegt die Gesamtdichte der Pulvermischung im Bereich zwischen 180 und 340 kg/m³. Hiermit lassen sich besonders niedrige Wärmeleitfähigkeiten k_eff im Bereich zwischen 0,013 und 0,04 W/mK erzielen.

Gemäß einer weiteren bevorzugten Ausführungsform weist das expandierte Perlit eine mittlere Korngröße von 2 bis 100 μm und insbesondere von 10 bis 70 μm auf. Expandiertes Perlit dieses Typs hat sich als besonders geeignet herausgestellt. Die mittlere Korngröße ist der Mittelwert der Korngrößen der einzelnen Körner.

Gemäß einer besonders bevorzugten Ausführungsform weist das expandierte Perlit eine mittlere Korngröße von 35 μm und eine Verteilung der Korngröße von 5 bis 140 μm auf. Ein solches Perlit wird als Perlit Eurocell® 140 angeboten. Die mittlere Korngröße und die Verteilung werden durch Siebanalyse nach DIN 66165 bestimmt.

Gemäß einer weiteren bevorzugten Ausführungsform weist das pulverförmige Trübungsmittel eine mittlere Korngröße von 1 bis 10 μm und vorzugsweise von 1,5 bis 4 μm auf. Versuche haben gezeigt, dass die besten Ergebnisse bei einer mittleren Korngröße in diesem Bereich erreicht werden .

Gemäß einer besonders bevorzugten Ausführungsform ist das Trübungsmittel Siliziumkarbid mit einer mittleren Korngröße von 2 μm und einer Korngrößenverteilung zwischen 1 und 6 μm. Wie die Versuche gezeigt haben, werden bei Siliziumkarbid die besten Ergebnisse erzielt und die allerbesten mit Siliziumkarbid mit einer mittleren Korngröße von 2 μm und einer Korngrößenverteilung zwischen 1 und 6 μm. Ein Siliziumkarbid mit derartigen Eigenschaften ist beispielsweise unter der Bezeichnung Silcar® P8 erhältlich. Die mittlere Korngröße und die Verteilung werden durch Laserbeugung nach ISO 13320 bestimmt.

Erfindungsgemäß beträgt der Anteil von Siliziumkarbid in der Pulvermischung 20 bis 80 Gewichts-%, vorzugsweise 20 bis 60 Gewichts-%, und insbesondere vorzugsweise 30 bis 50 Gewichts-%. Hiermit werden mit Siliziumkarbid als Trübungsmittel besonders niedrige Werte für die effektive Wärmeleitfähigkeit k_eff erzielt.

Gemäß einem zweiten Aspekt der Erfindung wird die oben genannte Aufgabe in Bezug auf ein Hochtemperatur-Wärmeisolationselement dadurch gelöst, dass wenigstens ein Formteil aus Hochtemperatur-Wärmeisolationsmaterial gemäß dem ersten Aspekt der Erfindung gepresst wird.

Ein Formteil kann beispielsweise ein ebenes Dämmpaneel zur Dämmung einer ebenen Fläche, ein Hohlzylinder oder eine zylindrische Halbschale zur Dämmung eines zylindrischen Rohres, oder ein anderweitig geformtes Formteil sein. Dadurch, dass ein Formteil aus Hochtemperatur-Wärmeisolationsmaterial gemäß dem ersten Aspekt der Erfindung gepresst wird, können Bauteile verschiedener Geometrie in verschiedenen Dämmanwendungen effizient gedämmt werden.

Gemäß einer bevorzugten Ausführungsform enthält das Formteil neben dem Hochtemperatur-Wärmeisolationsmaterial auch Faserelemente. Beispielsweise enthält das Formteil Glasfasern. Durch den Zusatz von Faserelementen kann die Formstabilität der Formteile verbessert werden.

Gemäß einer weiteren bevorzugten Ausführungsform ist das Formteil in eine vakuumdichte Hülle eingeschlossen und evakuiert. Vakuumdicht bedeutet, dass die Hülle ausreichend dicht ist, damit der Innenraum der vakuumdichten Hülle evakuiert werden kann. Evakuiert bedeutet, dass der Gasdruck im Inneren der vakuumdichten Hülle niedriger als der Gasdruck der Umgebung oder niedriger als 300 mbar ist (vgl. DIN 28400 Teil 1). Beispielsweise beträgt der Gasdruck im Innenraum der vakuumdichten Hülle weniger als 10 mbar, beispielsweise 0,05 mbar oder 0,001 mbar. Durch das Evakuieren können besonders niedrige Wärmeleitfähigkeiten k_eff erreicht werden. Das Formteil ist beispielsweise ein ebenes Dämmpaneel, ein Hohlzylinder, eine zylindrische Halbschale oder ein anderweitig geformtes Formteil, welches von einer vakuumdichten Hülle umgeben ist und evakuiert ist. Insbesondere kann das Formteil auch erst durch das Evakuieren entstehen, indem das Hochtemperatur-Wärmeisolationsmaterial in eine vakuumdichte Hülle eingefüllt, die Hülle versiegelt, und das Hochtemperatur-Wärmeisolationsmaterial beim Evakuieren durch den von außen wirkenden Gasdruck der Umgebung zusammen gepresst wird.

Gemäß einer weiteren bevorzugten Ausführungsform besteht die vakuumdichte Hülle aus einer verschweißten Metallfolie und insbesondere aus einer Edelstahlmetallfolie. Derartige Metallfolien zeichnen sich durch eine besonders gute Vakuumdichtigkeit bei hohen Temperaturen aus. Somit kann der Gasdruck im Inneren der vakuumdichten Hülle über einen langen Zeitraum, beispielsweise über mehrere Monate, niedrig gehalten werden. Entsprechend kann die Wärmeleitfähigkeit k_eff über diesen Zeitraum ebenfalls niedrig gehalten werden. Die Dicke der Metallfolie liegt vorzugsweise zwischen 50 und 100 μm. Hierdurch ist eine ausreichende Vakuumdichtigkeit gegeben; gleichzeitig werden Wärmebrücken, die sich am Rand des Hochtemperatur-Wärmeisolationselements durch die Metallfolie ergeben, klein gehalten.

Gemäß dem zweiten Aspekt der Erfindung wird auch ein Hochtemperatur-Wärmeisolationselement mit einer formstabilen, vakuumdichten Metallhülle beschrieben, in die Hochtemperatur-Wärmeisolationsmaterial gemäß dem ersten Aspekt der Erfindung eingefüllt ist, und die evakuiert ist. Hierbei wird das Hochtemperatur-Wärmeisolationsmaterial also nicht zu einem Formteil gepresst, sondern die Pulvermischung wird in eine formstabile, vakuumdichte Metallhülle eingefüllt. Vakuumdicht bedeutet, dass die Metallhülle ausreichend dicht ist, damit der Innenraum der formstabilen, vakuumdichten Metallhülle evakuiert werden kann. Formstabil bedeutet, dass die Metallhülle ausreichend stabil ist, um ihre Form zu behalten, wenn der Innenraum der formstabilen, vakuumdichten Metallhülle evakuiert wird, und der Gasdruck der Umgebung auf die formstabile, vakuumdichte Metallhülle wirkt. Beispielsweise beträgt der Gasdruck im Innenraum der formstabilen, vakuumdichten Metallhülle weniger als 10 mbar, beispielsweise 0,05 mbar oder 0,001 mbar. Durch das Evakuieren können besonders niedrige Wärmeleitfähigkeiten k_eff erreicht werden.

Gemäß einer bevorzugten Ausführungsform umschließt die formstabile, vakuumdichte Metallhülle einen Hohlraum, so dass sich ein doppelwandiger Behälter ergibt. Beispielsweise ergibt sich hierdurch ein zylindrischer, doppelwandiger Behälter; ebenso kann sich jedoch auch ein kugelförmiger, doppelwandiger Behälter oder ein anderweitig geformter, doppelwandiger Behälter ergeben. Beispielsweise wird das Hochtemperatur-Wärmeisolationsmaterial in den Ringspalt des beispielsweise zylindrischen, doppelwandigen Behälters eingefüllt. Beispielsweise wird in das Volumen, das von der inneren Wand des beispielsweise zylindrischen, doppelwandigen Behälters umschlossen wird, ein Wärmespeichermedium eingebracht. Eine derartige Anordnung eignet sich beispielsweise als Wärmespeicher, der aufgrund der niedrigen Wärmeleitfähigkeit k_eff des in den Ringspalt eingefüllten und evakuierten Hochtemperatur-Wärmeisolationsmaterials besonders gut wärmegedämmt ist.

Gemäß dem zweiten Aspekt der Erfindung wird auch ein Hochtemperatur-Wärmeisolationselement in Form einer Pulverschüttung des Hochtemperatur-Wärmeisolationsmaterials gemäß dem ersten Aspekt der Erfindung beschrieben, wobei sich die Pulverschüttung in einer Gasatmosphäre befindet, die nicht evakuiert ist. Nicht evakuiert bedeutet, dass der Gasdruck der Gasatmosphäre im Wesentlichen gleich hoch oder höher wie der Gasdruck der Umgebung ist und zugleich mindestens 300 mbar beträgt (vgl. DIN 28400 Teil 1). Beispielsweise liegt der Gasdruck der Gasatmosphäre zwischen 500 und 1500 mbar, beispielsweise im Bereich zwischen 900 und 1100 mbar.

Beispielsweise befindet sich die Pulverschüttung in der Umgebungsluft als Gasatmosphäre. Es sind jedoch auch andere Gase, insbesondere wärmeisolierende Gase wie beispielsweise Argon oder Krypton denkbar. Dadurch, dass die Pulverschüttung nicht evakuiert ist, können Kosten, insbesondere für teure Vakuumanlagen, eingespart werden. Auch eine vakuumdichte Hülle ist bei einem Hochtemperatur-Wärmeisolationselement in Form einer nicht-evakuierten Pulverschüttung nicht erforderlich. Die Pulverschüttung kann jedoch trotzdem von einer Hülle umgeben sein, etwa um die Pulverschüttung an Ort und Stelle zu halten. Die Hülle muss jedoch weder vakuumdicht noch formstabil sein.

Nachfolgend werden bevorzugte Ausführungsformen der Erfindung anhand der Tabellen 1 bis 5, die tabellarisch die erzielten k_eff-Werte für verschiedene Pulvermischungen zeigen, sowie anhand der Zeichnungen beschrieben. Dabei zeigen die Zeichnungen in

Fig. 1 eine schematische Schnittdarstellung eines Hochtemperatur-Wärmeisolationselements gemäß dem zweiten Aspekt der Erfindung, in

Fig. 2 eine schematische Schnittdarstellung (Längsschnitt) eines weiteren Hochtemperatur-Wärmeisolationselements gemäß dem zweiten Aspekt, in

Fig. 3 eine weitere schematische Schnittdarstellung (Querschnitt) des Hochtemperatur-Wärmeisolationselements aus Fig. 3, und in

Fig. 4 eine schematische Schnittdarstellung eines weiteren Hochtemperatur-Wärmeisolationselements gemäß dem zweiten Aspekt.

In den nachfolgenden Tabellen 1 bis 3 sind verschiedene Messreihen gezeigt, wobei in allen Fällen Perlit Eurocell® 140 mit einer mittleren Korngröße von 35 $\mu$m und einer Verteilung von 5 bis 140 $\mu$m eingesetzt wird. Die Messung der Wärmeleitfähigkeit k_eff erfolgte mit dem Plattenverfahren (Guarded Hot Plate), welches in der DIN 52612, DIN EN 12667, oder auch ASTM C177 beschrieben wird. In allen Fällen werden die k_eff in evakuiertem Zustand, ca. 0,05 mbar ermittelt. Die mittlere Korngröße des als Trübungsmittel eingesetzten Siliziumkarbidpulvers Silcar® P8 liegt bei 2 $\mu$m mit einer Verteilung von ca. 1 bis 6 $\mu$m.

In der ersten Messserie wird Perlit Eurocell 140 ohne Zusatz von Trübungsmitteln eingesetzt. Die in Tabelle 1 dargestellten Messergebnisse zeigen, dass selbst ohne Zusatz von Trübungsmitteln k_eff-Werte erzielt werden, die unter den Werten herkömmlicher Dämmstoffe, wie Mineralwolle, Silikatfasermatten und Calciumsilikatplatten liegen. Bezüglich der k_eff-Werte für herkömmliche Dämmstoffe wird auf den genannten Vortrag von Beikircher verwiesen. Die Dichte des Perlitpulvers liegt bei 180 kg/m$^3$.

Tabelle 1: Erste Messserie mit reinem Perlit Eurocell 140 (Dichte: 180 kg/m$^3$) bei verschiedenen Temperaturen im evakuierten Zustand

| Temperatur [°C] | Wärmeleitfähigkeit [W/mK] |
|---|---|
| 100 | 0,005 |

(fortgesetzt)

| Temperatur [°C] | Wärmeleitfähigkeit [W/mK] |
|---|---|
| 200 | 0,009 |
| 400 | 0,022 |
| 600 | 0,040 |

Die zweite Messserie (Tabelle 2) zeigt verschiedene Pulvermischungen von expandiertem Perlit (Perlit Eurocell 140) mit unterschiedlichen Beimischungen von Siliziumkarbid als Trübungsmittel bei 400°C. Mit Ausnahme des ersten Wertes - kein Trübungsmittel - liegen für alle genannten Konzentrationen die k_eff-Werte unter 0,017 W/mK und damit im Bereich von pyrogener Kieselsäure mit Trübungsmittel. Die Dichte der Pulvermischung liegt zwischen 180 und 342 kg/m$^3$.

Tabelle 2: Zweite Messserie bei 400°C im evakuierten Zustand mit Pulvermischungen aus Perlit Eurocell 140 und Trübungsmittel SiC unter Variation des Mischungsanteils und damit auch der Dichte:

| SiC-Anteil [Gew.-%] | Dichte [kg/m$^3$] | Wärmeleitfähigkeit [W/mK] |
|---|---|---|
| 0 | 180 | 0,022 |
| 20 | 214 | 0,016 |
| 30 | 236 | 0,014 |
| 40 | 263 | 0,013 |
| 50 | 297 | 0,014 |
| 60 | 342 | 0,016 |

Die dritte Messserie (Tabelle 3) zeigt eine Pulvermischung aus 60 Gew.-% Perlit Eurocell 140 und 40 Gew.-% Siliziumkarbidpulver als Trübungsmittel. Die Gesamtdichte der Pulvermischung beträgt 263 kg/m3. Die gemessenen k_eff-Werte für Temperaturen zwischen 100°C und 600°C liegen zwischen 0,005 und 0,020 W/mK.

Tabelle 3: Dritte Messserie mit Pulvermischung aus Perlit Eurocell 140 und Trübungsmittel SiC (SiC-Anteil: 40 Gew.-%, Dichte: 263 kg/m$^3$) bei verschiedenen Temperaturen im evakuierten Zustand:

| Temperatur [°C] | Wärmeleitfähigkeit [W/mK] |
|---|---|
| 100 | 0,005 |
| 200 | 0,008 |
| 400 | 0,014 |
| 600 | 0,020 |

Die nachfolgenden Tabellen 4 und 5 zeigen weitere Messreihen, bei denen die untersuchten Materialien nicht evakuiert waren. Die Messungen wurden in einer Stickstoffatmosphäre bei ca. 980 mbar durchgeführt. In der vierten Messserie (Tabelle 4) ist Perlit Eurocell 140 ohne Zusatz von Trübungsmitteln gezeigt. Die Dichte des Perlitpulvers liegt bei 180 kg/m$^3$. In der fünften Messserie (Tabelle 5) ist eine Pulvermischung aus 60 Gew.-% Perlit Eurocell 140 und 40 Gew.-% Siliziumkarbidpulver als Trübungsmittel gezeigt. Die Gesamtdichte der Pulvermischung beträgt 263 kg/m$^3$. Die in Tabelle 4 und 5 dargestellten Messergebnisse zeigen, dass im nicht-evakuierten Zustand k_eff-Werte erzielt werden, die im Bereich herkömmlicher Dämmstoffe, wie Mineralwolle, Silikatfasermatten und Calciumsilikatplatten liegen. Bezüglich der k_eff-Werte für herkömmliche Dämmstoffe wird erneut auf den genannten Vortrag von Beikircher verwiesen. Durch den Verzicht auf das Evakuieren können Kosten eingespart werden.

Tabelle 4: Vierte Messserie mit reinem Perlit Eurocell 140 (Dichte: 180 kg/m$^3$) bei verschiedenen Temperaturen im nicht-evakuierten Zustand

| Temperatur [°C] | Wärmeleitfähigkeit [W/mK] |
|---|---|
| 100 | 0,059 |
| 200 | 0,070 |

(fortgesetzt)

| Temperatur [°C] | Wärmeleitfähigkeit [W/mK] |
|---|---|
| 400 | 0,095 |
| 600 | 0,119 |

Tabelle 5: Fünfte Messserie mit Pulvermischung aus Perlit Eurocell 140 und Trübungsmittel SiC (SiC-Anteil: 40 Gew.-%, Dichte: 263 kg/m$^3$) bei verschiedenen Temperaturen im nicht-evakuierten Zustand:

| Temperatur [°C] | Wärmeleitfähigkeit [W/mK] |
|---|---|
| 100 | 0,059 |
| 200 | 0,068 |
| 400 | 0,085 |
| 600 | 0,099 |

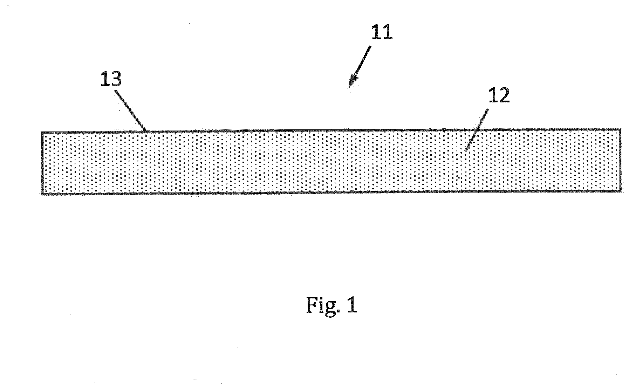

In Fig. 1 ist eine schematische Schnittdarstellung eines Hochtemperatur-Wärmeisolationselements gemäß dem zweiten Aspekt der Erfindung gezeigt. Das Hochtemperatur-Wärmeisolationselement (11) umfasst ein gepresstes Formteil (12), hier in Form eines ebenen Paneels bestehend aus Hochtemperatur-Wärmeisolationsmaterial gemäß dem ersten Aspekt der Erfindung, und eine vakuumdichte Hülle (13). Das Formteil (12) enthält nicht zwingend Faserelemente; es kann zur Verbesserung der Formstabilität jedoch auch Faserelemente, wie beispielsweise Glasfasern enthalten. Die vakuumdichte Hülle (13) besteht aus einer verschweißten Metallfolie, hier beispielsweise aus einer Edelstahlfolie mit einer Dicke von beispielsweise 100 μm. Der von der vakuumdichten Hülle (13) umschlossene Raum, in dem sich das Formteil (12) befindet, ist evakuiert, beispielsweise auf einen Gasdruck von 0,05 mbar. Bedingt durch die Paneelform des Formteils (12) eignet sich das Hochtemperatur-Wärmeisolationselement (11) insbesondere zur Wärmeisolation von ebenen Flächen.

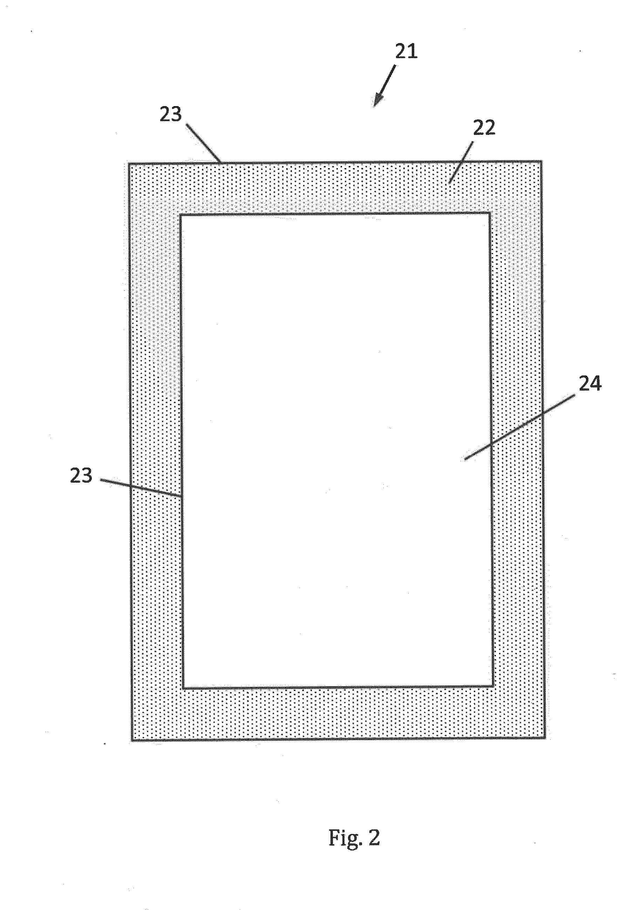

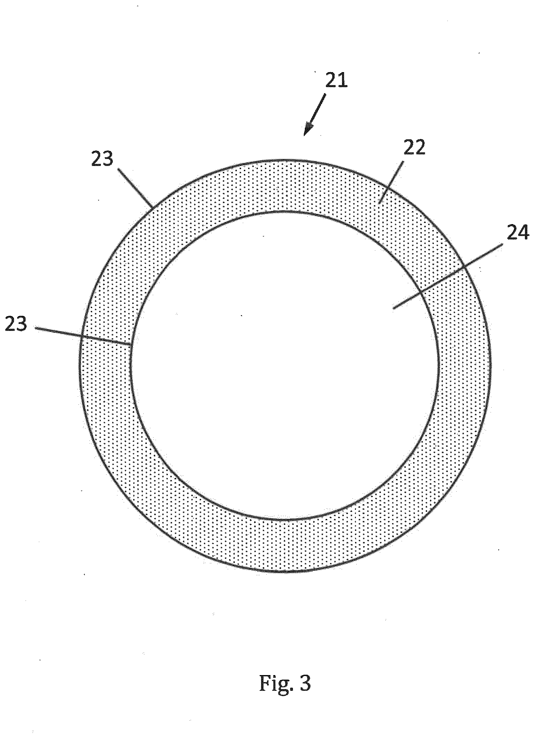

Fig. 2 zeigt einen schematischen Längsschnitt eines weiteren Hochtemperatur-Wärmeisolationselements gemäß dem zweiten Aspekt der Erfindung; Fig. 3 zeigt einen entsprechenden schematischen Querschnitt. Das Hochtemperatur-Wärmeisolationselement (21) ist hier ein zylindrischer, doppelwandiger Behälter mit einer formstabilen, vakuumdichten Metallhülle (23), in die Hochtemperatur-Wärmeisolationsmaterial (22) gemäß dem ersten Aspekt der Erfindung eingefüllt ist. Der durch die beiden Wände der formstabilen, vakuumdichten Metallhülle (23) gebildete Raum, in den das Hochtemperatur-Wärmeisolationsmaterial (22) eingefüllt ist, ist evakuiert, beispielsweise auf 0,05 mbar. Da die formstabile, vakuumdichte Metallhülle (23) formstabil ist, behält das Hochtemperatur-Wärmeisolationselement (21) seine Form, auch wenn durch das Evakuieren der Gasdruck der Umgebung auf das Hochtemperatur-Wärmeisolationselement (21) wirkt. Die formstabile, vakuumdichte Metallhülle (23) umschließt zudem einen Hohlraum (24), so dass sich ein doppelwandiger Behälter, hier ein zylindrischer, doppelwandiger Behälter ergibt. Der durch die beiden Wände der formstabilen, vakuumdichten Metallhülle (23) gebildete Raum, in den das Hochtemperatur-Wärmeisolationsmaterial (22) eingefüllt ist, wird hierbei auch als Ringspalt bezeichnet. In den von der formstabilen, vakuumdichten Metallhülle (23) umschlossenen Hohlraum (24) kann beispielsweise ein Wärmespeichermedium eingebracht werden. Das Hochtemperatur-Wärmeisolationselement (21) isoliert dann das Wärmespeichermedium im Hohlraum (24), sodass sich die gesamte Anordnung als Wärmespeicher eignet.

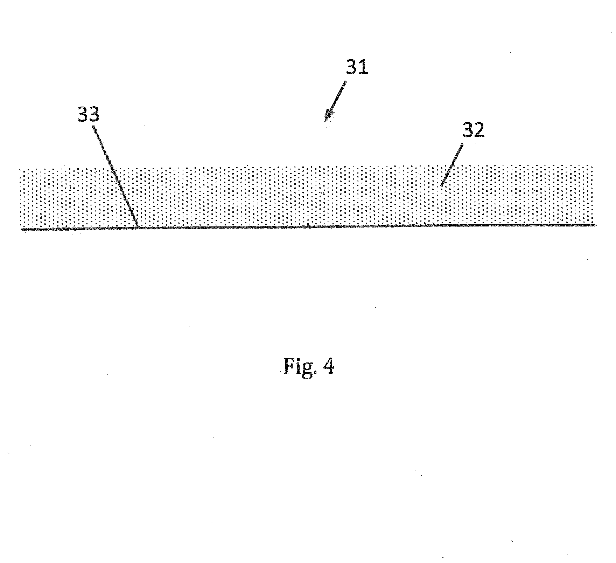

Fig. 4 zeigt schließlich eine schematische Schnittdarstellung eines weiteren Hochtemperatur-Wärmeisolationselements gemäß dem zweiten Aspekt der Erfindung. Das Hochtemperatur-Wärmeisolationselement (31) liegt hier in Form einer Pulverschüttung (32) vor, die aus Hochtemperatur-Wärmeisolationsmaterial gemäß dem ersten Aspekt der Erfindung besteht. Die Pulverschüttung (32) befindet sich in einer Gasatmosphäre, die nicht evakuiert ist. Hier befindet sich die Pulverschüttung (32) beispielsweise in der Umgebungsluft als Gasatmosphäre, welche hier einen Gasdruck von beispielsweise 1000 mbar aufweist. Die Pulverschüttung ist im Kontakt mit einer Oberfläche (33), welche isoliert werden soll. Hier hat die Oberfläche (33) eine ebene Form; sie kann jedoch ebenso eine andere, insbesondere eine unregelmäßige Form haben. In diesem Fall passt sich die Pulverschüttung (32) der unregelmäßigen Form der Oberfläche (33) an. Die Pulverschüttung (32) muss nicht zwingend von einer Hülle umgeben sein; sie kann jedoch trotzdem von einer Hülle (hier nicht gezeigt) umgeben sein, beispielsweise um die Pulverschüttung an Ort und Stelle zu halten. Die Hülle muss jedoch weder vakuumdicht noch formstabil sein.

**Patentansprüche**

1. Hochtemperatur-Wärmeisolationsmaterial in Form einer Pulvermischung mit expandiertem Perlit in Pulverform und Trübungsmittel in Pulverform,
   **dadurch gekennzeichnet, dass**
   die Pulvermischung aus expandiertem Perlit und einem Trübungsmittel besteht, wobei die Pulvermischung eine Schüttdichte im Bereich zwischen 160 und 500 kg/m$^3$ aufweist, und wobei in der Pulvermischung 20 bis 80 Gewichts-% Siliziumkarbid als Trübungsmittel enthalten sind.

2. Hochtemperatur-Wärmeisolationsmaterial nach Anspruch 1,
   **dadurch gekennzeichnet, dass**
   die Pulvermischung eine Schüttdichte im Bereich zwischen 180 und 340 kg/m$^3$ aufweist.

3. Hochtemperatur-Wärmeisolationsmaterial nach Anspruch 1 oder 2,
   **dadurch gekennzeichnet, dass**
   das expandierte Perlit eine mittlere Korngröße von 2 bis 100 μm und vorzugsweise von 10 bis 70 μm aufweist, wobei die mittlere Korngröße durch Siebanalyse nach DIN 66165 bestimmt wird.

4. Hochtemperatur-Wärmeisolationsmaterial nach Anspruch 3,
   **dadurch gekennzeichnet, dass**
   das expandierte Perlit eine mittlere Korngröße von 35 μm und eine Verteilung der Korngröße von 5 bis 140 μm aufweist, wobei die mittlere Korngröße und die Verteilung der Korngröße durch Siebanalyse nach DIN 66165 bestimmt werden.

5. Hochtemperatur-Wärmeisolationsmaterial nach einem der Ansprüche 1 bis 4,
   **dadurch gekennzeichnet, dass**
   das Trübungsmittel eine mittlere Korngröße von 1 bis 10 μm und vorzugsweise von 1,5 bis 4 μm aufweist, wobei die mittlere Korngröße durch Laserbeugung nach ISO 13320 bestimmt wird.

6. Hochtemperatur-Wärmeisolationsmaterial nach Anspruch 5,
   **dadurch gekennzeichnet, dass**
   das Trübungsmittel Siliziumkarbid mit einer mittleren Korngröße von 2 μm und einer Verteilung der Korngröße von 1 bis 6 μm ist, wobei die mittlere Korngröße und die Verteilung der Korngröße durch Laserbeugung nach ISO 13320 bestimmt werden.

7. Hochtemperatur-Wärmeisolationsmaterial nach einem der Ansprüche 1 bis 6,
   **dadurch gekennzeichnet, dass**
   in der Pulvermischung 20 bis 60 Gewichts-%, und vorzugsweise 30 bis 50 Gewichts-% Siliziumkarbid als Trübungsmittel enthalten sind.

8. Hochtemperatur-Wärmeisolationselement, mit wenigstens einem gepressten Formteil aus Hochtemperatur-Wärmeisolationsmaterial nach einem der Ansprüche 1 bis 7.

9. Hochtemperatur-Wärmeisolationselement nach Anspruch 8,
   **dadurch gekennzeichnet, dass**
   das Formteil Faserelemente enthält.

10. Hochtemperatur-Wärmeisolationselement nach Anspruch 8 oder 9,
    **dadurch gekennzeichnet, dass**
    das Formteil in eine vakuumdichte Hülle eingeschlossen und evakuiert ist.

11. Hochtemperatur-Wärmeisolationselement nach Anspruch 10,
    **dadurch gekennzeichnet, dass**
    die vakuumdichte Hülle aus einer verschweißten Metallfolie und insbesondere aus einer Edelstahlmetallfolie besteht.

12. Hochtemperatur-Wärmeisolationselement, mit einer formstabilen, vakuumdichten Metallhülle, in die Hochtemperatur-Wärmeisolationsmaterial nach einem der Ansprüche 1 bis 7 eingefüllt ist, und die evakuiert ist.

**13.** Hochtemperatur-Wärmeisolationselement nach Anspruch 12,
**dadurch gekennzeichnet, dass**
die formstabile, vakuumdichte Metallhülle einen Hohlraum umschließt, so dass sich ein doppelwandiger Behälter ergibt.

**14.** Hochtemperatur-Wärmeisolationselement in Form einer Pulverschüttung des Hochtemperatur-Wärmeisolationsmaterials nach einem der Ansprüche 1 bis 7, wobei sich die Pulverschüttung in einer Gasatmosphäre befindet, die nicht evakuiert ist.

**Claims**

**1.** High-temperature thermal insulation material in the form of a powder mixture with expanded perlite in powder form and opacifier in powder form,
**characterized in that**
the powder mixture consists of expanded perlite and an opacifier, wherein the powder mixture has a bulk density in the range between 160 and 500 kg/m$^3$, and wherein 20 to 80 % by weight of silicon carbide is contained in the powder mixture as an opacifier.

**2.** High-temperature thermal insulation material according to claim 1,
**characterized in that**
the powder mixture has a bulk density in the range between 180 and 340 kg/m$^3$.

**3.** High-temperature thermal insulation material according to claim 1 or 2,
**characterized in that**
the expanded perlite has a mean grain size of 2 to 100 $\mu$m and preferably of 10 to 70 $\mu$m, the mean grain size being determined by sieve analysis according to DIN 66165.

**4.** High-temperature thermal insulation material according to claim 3,
**characterized in that**
the expanded perlite has a mean grain size of 35 $\mu$m and a grain size distribution of 5 to 140 $\mu$m, the mean grain size and the grain size distribution being determined by sieve analysis according to DIN 66165.

**5.** High-temperature thermal insulation material according to one of claims 1 to 4,
**characterized in that**
the opacifier has a mean grain size of 1 to 10 $\mu$m and preferably of 1.5 to 4 $\mu$m, the mean grain size being determined by laser diffraction according to ISO 13320.

**6.** High-temperature thermal insulation material according to claim 5,
**characterized in that**
the opacifier is silicon carbide with a mean grain size of 2 $\mu$m and a grain size distribution of 1 to 6 $\mu$m, the mean grain size and the grain size distribution being determined by laser diffraction according to ISO 13320.

**7.** High-temperature thermal insulation material according to one of claims 1 to 6,
**characterized in that**
20 to 60 % by weight, and preferably 30 to 50 % by weight, of silicon carbide is contained in the powder mixture as an opacifier.

**8.** High-temperature thermal insulation element, with at least one pressed molded part made of high-temperature thermal insulation material according to one of claims 1 to 7.

**9.** High-temperature thermal insulation element according to claim 8,
**characterized in that**
the moulded part contains fibre elements.

**10.** High-temperature thermal insulation element according to claim 8 or 9,
**characterized in that**
the moulded part is enclosed in a vacuum-tight envelope and evacuated.

**11.** High-temperature thermal insulation element according to claim 10,
**characterized in that**
the vacuum-tight envelope consists of a welded metal foil and in particular of a stainless-steel metal foil.

**12.** High-temperature thermal insulation element, with a dimensionally stable, vacuum-tight metal shell, into which high-temperature thermal insulation material according to one of claims 1 to 7 is filled, and which is evacuated.

**13.** High-temperature thermal insulation element according to claim 12,
**characterized in that**
the dimensionally stable, vacuum-tight metal shell encloses a cavity, so that a double-walled container results.

**14.** High-temperature thermal insulation element in the form of a powder bulk of the high-temperature thermal insulation material according to one of claims 1 to 7, wherein the powder bulk is located in a gas atmosphere which is not evacuated.

**Revendications**

**1.** Matériau d'isolation thermique à haute température sous la forme d'un mélange de poudres avec perlite expansée sous forme de poudre et un opacifiant sous forme de poudre,
**caractérisé en ce que**
le mélange de poudres est constitué de perlite expansée et d'un opacifiant, le mélange de poudres ayant une densité en vrac comprise entre 160 et 500 kg/m$^3$, et le mélange de poudres contenant de 20 à 80 % en poids de carbure de silicium comme opacifiant.

**2.** Matériau d'isolation thermique à haute température selon la revendication 1,
**caractérisé en ce que**
le mélange de poudre a une densité en vrac comprise entre 180 et 340 kg/m$^3$.

**3.** Matériau d'isolation thermique à haute température selon la revendication 1 ou 2,
**caractérisé en ce que**
la perlite expansée a une granulométrie moyenne de 2 à 100 $\mu$m et de préférence de 10 à 70 $\mu$m, la granulométrie moyenne étant déterminée par analyse par tamisage selon DIN 66165.

**4.** Matériau d'isolation thermique à haute température selon la revendication 3,
**caractérisé en ce que**
la perlite expansée a une granulométrie moyenne de 35 $\mu$m et une distribution granulométrique de 5 à 140 $\mu$m, la granulométrie moyenne et la distribution granulométrique étant déterminées par analyse par tamisage selon DIN 66165.

**5.** Matériau d'isolation thermique à haute température selon l'une des revendications 1 à 4,
**caractérisé en ce que**
l'opacifiant a une granulométrie moyenne de 1 à 10 $\mu$m et de préférence de 1,5 à 4 $\mu$m, la granulométrie moyenne étant déterminée par diffraction laser selon ISO 13320.

**6.** Matériau d'isolation thermique à haute température selon la revendication 5,
**caractérisé en ce que**
l'opacifiant est du carbure de silicium avec une granulométrie moyenne de 2 $\mu$m et une distribution granulométrique de 1 à 6 $\mu$m, la granulométrie moyenne et la distribution granulométrique étant déterminées par diffraction laser selon ISO 13320.

**7.** Matériau d'isolation thermique à haute température selon l'une des revendications 1 à 6,
**caractérisé en ce que**
le mélange de poudres contient de 20 à 80 % en poids, et de préférence de 30 à 50 % en poids, de carbure de silicium comme opacifiant.

**8.** Elément d'isolation thermique à haute température, avec au moins une pièce moulée par compression en matériau d'isolation thermique à haute température selon l'une des revendications1 à 7.

**9.** Elément d'isolation thermique à haute température selon la revendication 8,
**caractérisé en ce que**
la pièce moulée contient des éléments fibreux.

**10.** Elément d'isolation thermique à haute température selon la revendication 8 ou 9,
**caractérisé en ce que**
la pièce moulée est enfermée dans une enveloppe étanche au vide et mise sous vide.

**11.** Elément d'isolation thermique à haute température selon la revendication 10,
**caractérisé en ce que**
l'enveloppe étanche au vide est constituée d'une feuille métallique soudée et en particulier d'une feuille métallique en acier inoxydable.

**12.** Elément d'isolation thermique à haute température, avec une enveloppe métallique indéformable et étanche au vide, dans laquelle est rempli un matériau d'isolation thermique à haute température selon l'une des revendications 1 à 7, et qui est mise sous vide.

**13.** Elément d'isolation thermique à haute température selon la revendication 12,
**caractérisé en ce que**
l'enveloppe métallique indéformable et étanche au vide entoure un espace creux, de sorte qu'il en résulte un récipient à double paroi.

**14.** Elément d'isolation thermique à haute température sous la forme d'une poudre en vrac du matériau d'isolation thermique à haute température selon l'une des revendications 1 à 7, la poudre en vrac se trouvant dans une atmosphère gazeuse qui n'est pas mise sous vide.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102008003400 A1
- DE 102008003421 A1
- DE 102005045726 A1
- DE 102010029513 A1
- DE 202007013074 U1
- DE 4432896 C2
- WO 2017097768 A1
- US 3147877 A
- WO 2016108794 A1